# EUROPEAN PATENT APPLICATION

(11) **EP 1 825 747 A1**
(43) Date of publication of application: **29.08.2007**
(21) Application number: 06447026.3
(22) Date of filing: 22.02.2006
(51) Int. Cl.: A01G 9/22

(54) **Flame-resistant and UV-stable drapeable screens for shading and energy-saving applications**

(71) Applicant: Amcor Flexibles A/S, 8700 Horsens (DK)
(72) Inventor: Bögels, Erik, 3620 Lanaken (BE); Malfait, Tony, 8880 Ledegem (BE)
(74) Representative: pronovem

(57) **Abstract**

The present invention is related to a UV-resistant and flame-resistant drapeable screen for shading and energy-saving, comprising flexible strips, said strips comprising a multilayer structure, said multilayer structure comprising a metal foil and a sulphur-based polymer film selected from the group consisting of PPS (polyphenylene sulphide), PES (polyether sulfone), PPSU (polyphenylsulfone), PSU (polysulfone), PSF (aromatic polysulfone), PPSS (polyphenylene sulphide sulfone), PPSK (polyphenylene sulphide ketone) and block copolymers from PPSS and PPSK, PTEK (polytioetherketone) and combinations or modifications thereof.

## Description

### Field of the invention

The present invention relates to flame-resistant and UV-stable drapeable screens essentially used for shading and energy-saving in greenhouses and in the construction industry.

The screens are prepared in conventional yarn/woven structures using particular multilayer strips with a metallic layer and a polymer layer.

The multilayer strips used in the present invention combine the advantages of the energy reflection of the metal layer and the fire resistance of the chosen polymer layer.

### Background of the invention

Multilayer structures of combined metal and film layers have been successfully used in the past for the production of foil strips used in woven yarn systems for the realisation of drapeable screens in greenhouses.

The high humidity and temperatures reached in such greenhouses require a good UV-resistance and fire-resistance for safety reasons.

Protection screens do not only have a screen function but also an insulation function (greenhouses) in the winter in order to reduce the high heating costs.

When large surfaces of greenhouses are covered with such screens, the requirements of auto-extinguishing materials is obvious in order to avoid the dangers of a rapid spread of flames in a greenhouse environment.

Flame retardants have often an antagonistic effect on the UV resistance of polymer films. Those films essentially give the strength to the multilayer structure and if this polymer film is weakened by degradation due to UV rays, the screens have a very short lifetime

In the past, these requirements have been covered by the use of PVC metal combinations or by the use of halogen or phosphorous based plastic films, which may also contain other flame retardants.

Nevertheless, as known by those skilled in the art, the use of halogenated systems can produce high smoke developments and high smoke toxicity that the user tries to avoid. Furthermore, some polymers like PVC cannot be worked in conventional extrusion equipment.

EP-A-0 696 884 discloses a drapeable screen that is UV-stabilized and difficult to ignite for shading and energy-saving, based on a yarn system produced with metal polymer laminates, wherein the polymer is a halogen or phosphorous based plastic film.

### Aims of the invention

The present invention aims to disclose a UV-stable drapeable screen, comprising strips of a multilayer structure comprising a sulphur-based polymeric film. Sulphur-based polymers inherently keep high W-resistance and high flame resistance, they are therefore suitable for the above-mentioned applications.

### Summary of the invention

The present invention discloses a UV-resistant and flame-resistant drapeable screen, comprising flexible multilayer strips, said multilayer strips comprising a multilayer structure, including a metal layer and a sulphur-based polymer layer selected from the group consisting of PPS (polyphenylene sulphide), PES (polyether sulfone), PPSU (polyphenylsulfone), PSU (polysulfone), PSF (aromatic polysulfone), PPSS (polyphenylene sulphide sulfone), PPSK (polyphenylene sulphide ketone) and block copolymers from PPSS and PPSK, PTEK (polytioetherketone) and combinations thereof.

According to particular embodiments, the invention further discloses one or several of the following features:
- the strips are woven by means of a crochet or weave process and a yarn system;
- the polymer layer of the multilayer structure is oriented PPS;
- the polymer layer of the multilayer structure is oriented PPSU (polyphenylsulfone);
- the metal layer is selected from the group of aluminum, nickel and copper;
- the multilayer structure has a thickness below 200µm;
- the multilayer structure has a thickness below 50µm;
- the polymer layer is laminated to the metal layer;
- the multilayer structure is produced by metalising (vacuum/sputtering) the sulphur-based polymer layer;
- the multilayer structure is produced by adhesive lamination;
- the multilayer structure is produced by extrusion coating or extrusion lamination.

The present invention further,discloses the use of the drapeable screen according to Claim 1 for shading and energy-saving in greenhouses and for insulation materials in the construction industry.

### Detailed description of the invention

The major requests for the screens of the present invention are long-term UV and heat stability. High heat resistance is necessary for areas close to heating lamps.

Sulphur-based polymers such as PPS have always been considered as high end products essentially in electronic applications. The price of this polymer was not acceptable yet for applications like drapeable screens or for thermal insulation applications in general. Recently, the inventor started to produce unoriented sulphur-based polymer films with the surprise that these films could be produced on conventional extrusion equipment.

In terms of long-term heat resistance, PPS has better properties than PVDF known from the prior art.

Hydrolytical stability is necessary for outdoor applications and environments with high humidity such as greenhouses. In this case again, sulphur-based polymers such as PPS have better properties (according to steam sterilization test method) than PVDF known from EP-A-0 696 884.

Due to the better mechanical properties of sulphur-based polymers (better tensile strength and in case of the amorphous sulphur-based polymers, PES, PSU and PPSU also in combination with good toughness), the laminates of the present invention have the possibility of down-gauging the total thickness. Sulphur-based polymers are less dense than many similarly priced engineering resins, which means that they offer greater economy on a volumetric cost basis. Specific gravity for PPS is for instance 1.35. By contrast, fluoropolymers tend to have a specific gravity range around 1.8.

PVC on the other hand is much cheaper than sulphur-based polymers but has the following drawbacks:
- UV-stability (shorter lifetime than sulphur-based polymers);
- lower chemical stability than sulphur-based polymers;
- lower tensile strength;
- smoke toxicity and a lot of smoke generation in the case of fire;
- PVC waste disposal is environmentally unfriendly.

Halogen-containing polymers, such as PVC and PVDF, cannot be extruded straightforward on conventional polyolefin film extrusion equipment, known by those skilled in the art. PVC is generally produced on stacked calander reels whereas for PVDF, particular precautions should be taken on the extrusion barrel, the screw and all metallic parts because of its corrosive nature. Moreover, films produced from PVC and PVDF are relatively soft resulting in a limited tensile strength (see table hereunder) in order to support the aluminum in the production of the strips.

PPS films on the other hand are produced on conventional polyolefin cast extrusion, extrusion-coating or extrusion lamination lines without major line modifications. Films based on PPS and other sulphur-containing polymers have high tensile strengths in order to be applied in strips, even without further orientation of the film. The advantage of the relatively high tensile strength, compared to the halogen-based polymers, is the possibility of film down-gauging. However, since PPS is also easily orientable in both machine and cross directions, stretching of the PPS films even further increases the resulting film stiffness and consequently allows further down-gauging of the strips.

### Example 1

### Adhesive laminated aluminum foil structure with a mono-axial oriented PPS-film as support with a total thickness of 23µm

This laminate contains 8µm aluminum foil. The aluminum foil is adhesive-laminated against a 6µm oriented PPS film from Toray, type Torelina. The adhesive used is a halogen and phosphorous free 2-component polyurethane-system such as Adcote 301/350 from Rohm & Haas. A lamination speed of 200 m/min and an oven temperature of 80°C yield good adhesion. The adhesive should be applied onto the PPS-film.

### Example 2

### PPSU extrusion-coated aluminum foil structure based on 20µm PPSU from Solvay type Radel R 5000 and 8µm aluminum foil

A PPSU extrusion-coated aluminum foil structure based on 20µm PPSU from Solvay type Radel R 5000 and 8µm aluminum foil. Typical extrusion temperatures are 320°C on the zone 1 to 360°C on zone 3 of the cylinder, an adapter temperature of 360°C and die temperatures of 365°C. Line speeds of extrusion-coating line varies around 60m/min. To obtain good PPSU/aluminum adhesion, the aluminum foil should be surface-oxidized, for instance via corona treatment, before extrusion coating.

### Example 3

### PSU extrusion-coated aluminum foil structure based on 20µm PSU from Solvay type Udel P1700 and 8µ aluminum foil

Typical extrusion temperatures are 290°C on the zone 1 to 350°C on zone 3 of the cylinder, an adapter temperature of 350°C and die temperatures of 355°C. Line speed of extrusion-coating line varies around 60m/min. To obtain good PSU/aluminum adhesion, the aluminum foil should be surface-oxidized, for instance via corona treatment, before extrusion coating.

### Example 4

### Heat-laminated aluminum/PPS multilayer structure

Good adhesion is obtained when a 40µm, amorphous (<20% crystallinity) PPS-film based on Fortron 0320C0 from Fortron Industries (Ticona GmbH) is heat-laminated at temperatures >120°C against a primed 8µm aluminum foil. The thickness of the hydrolysis resistant polyester/urethane primer is maximum 1µ.

| | | **Tm** | **Tg** | **Density** | **Tensile strength at yield (MPa)** |
|---|---|---|---|---|---|
| | **LOI %** | **(°C)** | **(°C)** | **(g/cm3)** | |
| **PVC** | 44 | / | 80 | 1,39 | 36 - 50 |
| **PVDF** | 43 | 170 | -35 | 1,78 | 30 - 35 |
| **PPS** | 44 | 285 | 90 | 1,35 | 75 |
| **PSU** | 26 - 33 | / | 185 | 1,24 | 70 |
| **PES** | 40 | / | 220 | 1,37 | 80 |
| **PPSU** | 39 | / | 220 | 1,29 | 69 |

An LOI above 21% (= percentage oxygen normally present in air) indicates that the material has flame-retardant properties and thus the higher the LOI, the better. With filled grades even higher LOI values can be reached.

### Description of a preferred embodiment of the invention

A 9µm aluminum foil adhesive laminated with Adcote 301/350 (Rohm+Haas) against a 40µm cast-extruded PPS film based on Fortron 0320C0 form Fortron Industries (Ticona GmbH).

The obtained laminate is slitted into small strips of about 1mm to a few cm width depending on the specific needs. The multilayer of the present invention has a general thickness between 1 and 200µm, preferably between 5 and 100µm, and most preferably between 5 and 50µm.

The strips obtained after the slitting operation are then woven in a conventional weave system. The yarn can be chosen within conventional difficult-to-ignite materials.

## Claims

1. UV-resistant and flame-resistant drapeable screen, comprising flexible multilayer strips, said multilayer strips comprising a multilayer structure, including a metal layer and a sulphur-based polymer layer selected from the group consisting of PPS (polyphenylene sulphide), PES (polyether sulfone), PPSU (polyphenylsulfone), PSU (polysulfone), PSF (aromatic polysulfone), PPSS (polyphenylene sulphide sulfone), PPSK (polyphenylene sulphide ketone) and block copolymers from PPSS and PPSK, PTEK (polytioetherketone) and combinations thereof.

2. Drapeable screen according to Claim 1, **characterised in that** said strips are woven by means of a crochet or weave process and a yarn system.

3. Drapeable screen according to Claim 1, **characterised in that** the polymer layer of the multilayer structure is oriented PPS.

4. Drapeable screen according to Claim 1, **characterised in that** the polymer layer of the multilayer structure is oriented PPSU (polyphenylsulfone).

5. Drapeable screen according to Claim 1, **characterised in that** the metal layer is selected from the group of aluminum, nickel and copper.

6. Drapeable screen according to Claim 1, **characterised in that** the multilayer structure has a thickness below 200µm.

7. Drapeable screen according to Claim 1, **characterised in that** the multilayer structure has a thickness below 50µm.

8. Drapeable screen according to Claim 1, **characterised in that** the polymer layer is laminated to the metal layer.

9. Drapeable screen according to Claim 1, **characterised in that** said multilayer structure is produced by metalising (vacuum/sputtering) the sulphur-based polymer layer.

10. Drapeable screen according to Claim 1, **characterised in that** said multilayer structure is produced by adhesive lamination.

11. Drapeable screen according to Claim 1, **characterised in that** said multilayer structure is produced by extrusion coating or extrusion lamination.

12. Use of the drapeable screen of Claim 1 for shading and energy-saving in greenhouses.

13. Use of the drapeable screen of Claim 1 for insulation materials in the construction industry.
